# EUROPEAN PATENT SPECIFICATION

(11) **EP 1 627 269 B1**
(45) Date of publication and mention of the grant of the patent: **05.03.2008**
(21) Application number: 03786194.5
(22) Date of filing: 02.12.2003
(51) Int. Cl.: G06F 1/00

(54) **PROCESS AND SYSTEM FOR STORING MANAGING DISPLAYING AND PROTECTING MULTIMEDIA CONTENTS ON EXTERNAL STORAGE UNITS**
VERFAHREN UND SYSTEM ZUM SPEICHERN, VERWALTEN, ANZEIGEN UND SCHÜTZEN VON MULTIMEDIAINHALTEN IN EXTERNEN SPEICHEREINHEITEN
PROCEDE ET SYSTEME PERMETTANT DE STOCKER, GERER, AFFICHER ET PROTEGER UN CONTENU MULTIMEDIA SUR DES UNITES DE STOCKAGE EXTERNES

(43) Date of publication of application: 22.02.2006
(73) Proprietor: Supersonica S.R.L., 20020 Lainate (IT)
(72) Inventor: VALENTI, Antonino, I-20020 Lainate (IT)
(74) Representative: Garavelli, Paolo
(86) International application number: PCT/IT2003/000795
(87) International publication number: WO 2005/055023

(56) References cited:
- EP-A- 1 098 311
- WO-A-01/25948
- WO-A-01/88675
- US-A1- 2003 172 209
- US-B1- 6 581 160

## Description

The present invention refers to a process and a system for storing, managing, displaying and protecting multimedia contents on external storage units, of the Universal Serial Bus (U.S.B.) or other communication protocols.

Recently, portable external storage units have been developed, whose sizes are very small and whose capacity is high, adapted to be connected to personal computers through their U.S.B. port. The applications of such storage units however so far have been limited on one hand to provide a cryptographic key for enabling programs to be executed on personal computers themselves, and on the other hand to store data in order to be able to move them, together with a user, to different places or computers.

WO 01/25948A discloses a process and a system according to the preamble of claim 1 for distributing digital media assets to a plurality of users.

Applications like the one object of the present invention, instead, are not present in the prior art.

Object of the present invention is providing a process and a system that allow, in a simple but efficient way, to store, manage, display and protect multimedia contents being present on storage units of the above-mentioned type.

Further characteristics of the present invention are as follows:
- total integration: the whole system is residing in the storage unit;
- multi-platform (Windows®/MacOS®) compatibility;
- immediate use: it is enough to connect the inventive system to a U.S.B. (or other format) port of a computer in order to immediately display its contents without needing any installation (apart from the update of some system files when necessary);
- immediate transferability of the same inventive system from computer to computer to be used in different environments;
- capability of updating or replacing the contents through Internet;
- capability of purchasing new contents through Internet;
- capability of updating the managing software through Internet;
- contents-protecting system that is "transparent" for the user: no codes, passwords or hardware keys of any type are required for operating the inventive system with the provided multimedia contents. Only in order to download through Internet new multimedia files or updates, the user will be required to have a password and a user identification (that will be assigned to him) to be used upon purchasing to receive the license number of the downloaded multimedia file. The managing software integrated in the inventive system will then take care to import the downloaded files requiring only once their related license numbers for their validation.

The above and other objects and advantages of the invention, as will appear from the following description, are obtained by a process and a system as claimed in the independent Claims. Preferred embodiments and non-trivial variations of the present invention are claimed in the dependent Claims.

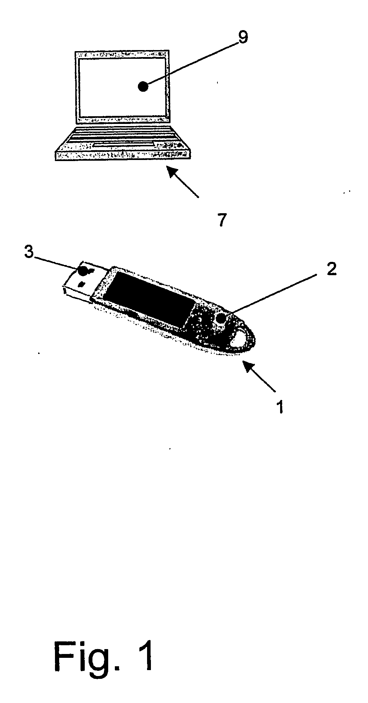

The present invention will be better described by some preferred embodiments thereof, given as a nonlimiting example, with reference to the enclosed drawings, in which the only Figure 1 is a schematic perspective view of aN external storage unit adapted to be used in the system of the present invention.

Herein below, a preferred, but not limiting, embodiment of the process and the system of the present invention is shown. They will be described herein below as applied to the field of supplying multimedia learning courses, but it is obvious that they can find a valid and efficient application to any field in which it is necessary to store, manage, display and protect data contained in portable external storage units.

According to the Figure, the system of the present invention substantially comprises:
- at least one external storage unit 1 composed of a support body 2 in which a central unit (not shown) is provided, and of an interface 3 for a communication port of a computer 7, for example of the U.S.B. type (or another similar format, such as USB2, Firewire (IEEE 1394), Smart Media, Flash RAM, ecc.);
- data bases with miscellaneous multimedia contents (residing in the central unit of the storage unit 1 or to be loaded in various ways, for example through Internet, etc.); and
- an integrated managing program, residing in the central unit of the storage unit 1, for storing, managing, displaying and protecting the above-mentioned multimedia contents.

In order to perform the step of storing (adding) the multimedia contents, the inventive system substantially performs the following steps:
- downloading additional multimedia contents as a file through Internet (or similar supports) together with a licence number;
- connecting the system to the computer 7 through a port of the U.S.B. type or another type;
- automatically displaying, by the computer 7, an icon of the storage unit 1 on a desktop of its display 9;
- activating an update mechanism by operating (for example by double-clicking) on an icon of the multimedia contents file;
- automatically performing, by the system managing software, necessary protection checks, a request for the licence number and a copy of the multimedia file of the system storage unit 1; and
- displaying, by the managing software, the main screen, with an already updated pop-up index, containing titles of added multimedia files.

In order to perform the step of managing (updating) the multimedia contents, the inventive system will substantially perform the following steps:
- downloading additional multimedia contents as a file through Internet (or similar supports) together with a licence number;
- connecting the system to the computer 7 through a port of the U.S.B. type or another type;
- automatically displaying, by the computer 7, an icon of the storage unit 1 on a desktop of its display 9;
- activating an update mechanism by operating (for example by double-clicking) on an icon of the multimedia contents file;
- automatically performing, by the system managing software, necessary protection checks, a request for the licence number and a copy of the multimedia file of the system storage unit 1; and
- updating the copied multimedia file, said updated file being modified in its title and its contents according to what is provided by the update file.

In order to perform the step of displaying the multimedia contents, the inventive system will substantially perform the following steps:
- connecting the system to the computer 7 through a port of the U.S.B. type or of another type;
- automatically displaying, by the computer 7, the system icon on a desktop of its display 9;
- manually opening a folder of the storage unit 1 by operating (for example by double-clicking the mouse) on a corresponding icon;
- executing the managing software by operating (for example by double-clicking the mouse) on a related icon inside the folder; and
- displaying, by the managing software, a pop-up index for selecting the multimedia material residing in the system memory 1.

In order to perform the step of protecting the multimedia contents, the inventive system will substantially perform the following steps:
- preparing the storage units 1 with special serial numbers;
- coupling the multimedia files with specific license numbers;
- customising the multimedia files with serial numbers of those storage units 1 in which they will be transferred;
- verifying, by the managing software, that all elements correspond before integrating data in the storage unit 1; and
- integrating, by the managing software, inside the storage unit 1, multimedia files that had been previously downloaded through a browser.

The step of verifying, by the managing software, for managing the multimedia contents, comprises the following checks:
- the storage unit 1 support, in which the managing software is located, must be of a removable type;
- the managing software name must correspond with the name contained inside the managing software;
- the name of the removable support of the storage unit 1 must correspond with the name contained inside the managing software;
- inside the removable software of the storage unit 1 a crypted file containing the license number must be present, called for example "licence.dll"; and
- the serial number inside the crypted file with the license number must correspond with the serial number of the removable support of the storage unit 1.

The step of verifying, by the managing software; for displaying the multimedia contents, comprises the following checks:
- the multimedia file extension must be correct;
- the multimedia file header must be correct;
- the multimedia file format must be correct;
- the multimedia file must be inside its related folder on the removable support of the inventive system, in which the managing software can also be found;
- inside the crypted file with the license number, name and number of licence of use of the multimedia file must be found: otherwise the managing software activates a displaying mode that is closed after a predetermined period of time;
- the multimedia file must contain the same number of licence of use that is present inside the crypted file with license number;
- the multimedia file must contain the same serial number of the removable support of the system in which it is present; and
- the multimedia file name must correspond with the name contained inside the managing software.

The step of verifying, by the managing software, for adding the multimedia contents, comprises the following checks:
- the multimedia file extension must be correct;
- the multimedia file header must be correct;
- the multimedia file format must be correct;
- the multimedia file must never have been previously credited; the multimedia file, therefore, must not contain license numbers;
- the license number used for displaying must never have been previously used, therefore it must not be present inside the crpyted file with the license number; and
- the license number used for displaying must have been generated depending on user password and serial number of the removable support of the inventive system, through a specific algorithm.

With the above-described inventive process and system, the following advantages are obtained:
- distribution and use of multimedia material;
- as regards the manufacturer, transparent (low cost) protection of contents;
- as regards the manufacturer too, regeneration of stocks (the contents can be updated or replaced);
- as regards the consumer, user friendliness (no installation is required);
- always from the consumer's point of view, transportability (the contents can be instantaneously seen on any computer), and updatability (the contents can be updated).

## Claims

1. System for storing, managing, displaying and protecting multimedia contents on external storage units (1), comprising:
- at least one external storage unit (1) composed of a support body (2) in which a central unit is provided, and of an interface (3) for a communication port of a computer (7);
- data bases with miscellaneous multimedia contents, said data bases being resident in said central unit of said storage unit (1) or being adapted to be loaded in said storage unit (1); and
- an integrated managing program, residing in said central unit of said storage unit (1), said managing program being adapted to perform the steps of storing, managing, displaying and protecting said data bases with multimedia contents, said managing program being adapted to perform the step of protecting said data bases with multimedia contents from unauthorised accesses through the following steps:
- preparing the storage units (1) with serial numbers;
- coupling the multimedia files with license numbers;
- customising the multimedia files with serial numbers of those storage units (1) in which they will be transferred; and
- integrating, by the managing software, inside the storage unit (1), multimedia files that had been previously downloaded through a browser;
**characterised in that**:
- the step of verifying, by the managing software, for managing the multimedia contents, comprises the following protection checks:
- a storage unit (1) support, in which the managing software is located, must be of a removable type;
- the name of the managing software located in the removable support must correspond with the name contained inside the managing software;
- the name of the removable support of the storage unit (1) must correspond with the name contained inside the managing software;
- inside the removable support of the storage unit (1) an encrypted file containing the license number coupled with the multimedia files must be present; and
- the serial number inside the encrypted file with the license number must correspond with the serial number of the removable support of the storage unit (1)

2. System according to claim 1, **characterised in that** said communication interface (3) of said external storage units (1) is of the U.S.B. (Universal Serial Bus) type.

3. System according to claim 1, **characterised in that** said communication interface (3) of said external storage units (1) is of the U.S.B.2, Firewire (IEEE 1394), Smart Media or Flash RAM type.

4. System according to claim 1, **characterised in that** said managing program performs the step of storing said data bases with multimedia contents through the following steps:
- downloading additional multimedia contents as a file through Internet together with a licence number;
- connecting the system to the computer (7) through a port;
- automatically displaying, by the computer (7), an icon of the storage unit (1) on a desktop of its display (9);
- activating an update mechanism by operating on an icon of the multimedia contents file;
- automatically performing, by the system managing software, said protection checks, a request for the licence number and a copy of the multimedia file of the system storage unit (1); and
- displaying, by the managing software, the main screen, with an already updated pop-up index, containing titles of added multimedia files.

5. System according to claim 1, **characterised in that** said managing program performs the step of managing said data bases with multimedia contents through the following steps:
- downloading additional multimedia contents as a file through Internet together with a licence number;
- connecting the system to the computer (7) through a port;
- automatically displaying, by the computer (7), an icon of the storage unit (1) on a desktop of its display (9);
- activating an update mechanism by operating on an icon of the multimedia contents file;
- automatically performing, by the system managing software, said protection checks, a request for the licence number and a copy of the multimedia file of the system storage unit (1); and
- updating the copied multimedia file, said updated file being modified in its title and its contents according to what is provided by the update mechanism.

6. System according to claim 1, **characterised in that** said managing program performs the step of displaying said data bases with multimedia contents through the following steps:
- connecting the system to the computer (7) through a port;
- automatically displaying, by the computer (7), the system icon on a desktop of its display (9);
- manually opening a folder of the storage unit (1) by operating on a corresponding icon;
- executing the managing software by operating on a related icon inside the folder; and
- displaying, by the managing software, a pop-up index for selecting the multimedia material residing in the system memory (1).

7. System according to claim 1, **characterised in that** the step of verifying, by the managing software, for displaying the multimedia contents, comprises the following checks:
- the multimedia file must be inside its related folder on the removable support of the system, in which the managing software can also be found;
- inside the encrypted file with the license number, name and number of licence of use of the multimedia file must be found: otherwise the managing software activates a displaying mode that is closed after a predetermined period of time;
- the multimedia file must contain the same number of licence of use that is present inside the encrypted file with license number;
- the multimedia file must contain the same serial number of the removable support of the system in which it is present; and
- the multimedia file name must correspond with the name contained inside the managing software.

8. System according to claim 1, **characterised in that** the step of verifying, by the managing software, for adding the multimedia contents, comprises the following checks:
- the multimedia file must never have been previously downloaded; the multimedia file, therefore, must not contain license numbers;
- the license number used for displaying must never have been previously used, therefore it must not be present inside the crpyted file with the license number; and
- the license number used for displaying must have been generated depending on user password and serial number of the removable support of the system, through an algorithm.

9. Process for storing data bases with multimedia contents stored in external storage units (1) using a system according to claim 1, said process comprising the steps of:
- downloading additional multimedia contents as a file through Internet together with a licence number;
- connecting the system to the computer (7) through a port ;
- automatically displaying, by the computer (7), an icon of the storage unit (1) on a desktop of its display (9);
- activating an update mechanism by operating on an icon of the multimedia contents file;
- automatically performing, by the system managing software, said protection checks, a request for the licence number and a copy of the multimedia file of the system storage unit (1); and
- displaying, by the managing software, the main screen, with an already updated pop-up index, containing titles of added multimedia files.

10. Process for managing data base with multimedia contents stored in external storage units (1) using a system according to claim 1, said process comprising the steps of:
- downloading additional multimedia contents as a file through Internet together with a licence number;
- connecting the system to the computer (7) through a port;
- automatically displaying, by the computer (7), an icon of the storage unit (1) on a desktop of its display (9);
- activating an update mechanism by operating on an icon of the multimedia contents file;
- automatically performing, by the system managing software, said protection checks, a request for the licence number and a copy of the multimedia file of the system storage unit (1); and
- updating the copied multimedia file, said updated file being modified in its title and its contents according to what is provided by the update mechanism.

11. Process for displaying data bases with multimedia contents stored in external storage units (1) using a system according to claim 1, said process comprising the steps of:
- connecting the system to the computer (7) through a port;
- automatically displaying, by the computer (7), the system icon on a desktop of its display (9);
- manually opening a folder of the storage unit (1) by operating on a corresponding icon;
- executing the managing software by operating on a related icon inside the folder; and
- displaying, by the managing software, a pop-up index for selecting the multimedia material residing in the system memory (1).

12. Process for protecting data bases with multimedia contents stored in external storage units (1) using a system according to claim 1, said process comprising the steps of:
- preparing the storage units (1) with serial numbers;
- coupling the multimedia files with license numbers;
- customising the multimedia files with serial numbers of those storage units (1) in which they will be transferred; and
- integrating, by the managing software, inside the storage unit (1), multimedia files that had been previously downloaded through a browser.

13. Process according to claim 12, **characterised in that** the step of verifying, by the managing software, for managing the multimedia contents, comprises the following checks:
- a storage unit (1) support, in which the managing software is located, must be of a removable type;
- the name of the managing software located in the removable support must correspond with the name contained inside the managing software;
- the name of the removable support of the storage unit (1) must correspond with the name contained inside the managing software;
- inside the removable support of the storage unit (1) an encrypted file containing the license number coupled with the multimedia files must be present; and
- the serial number inside the encrypted file with the license number must correspond with the serial number of the removable support of the storage unit (1).

14. Process according to claim 12, **characterised in that** the step of verifying, by the managing software, for displaying the multimedia contents, comprises the following checks:
- the multimedia file must be inside its related folder on the removable support of the system, in which the managing software can also be found;
- inside the encrypted file with the license number, name and number of licence of use of the multimedia file must be found: otherwise the managing software activates a displaying mode that is closed after a predetermined period of time;
- the multimedia file must contain the same number of licence of use that is present inside the encrypted file with license number;
- the multimedia file must contain the same serial number of the removable support of the system in which it is present; and
- the multimedia file name must correspond with the name contained inside the managing software.

15. Process according to claim 12, **characterised in that** the step of verifying, by the managing software, for adding the multimedia contents, comprises the following checks:
- the multimedia file must never have been previously downloaded; the multimedia file, therefore, must not contain license numbers;
- the license number used for displaying must never have been previously used, therefore it must not be present inside the crpyted file with the license number; and
- the license number used for displaying must have been generated depending on user password and serial number of the removable support of the system, through an algorithm.

## Patentansprüche

1. System für die Archivierung, Verwaltung, Anzeige und den Schutz multimedialer Inhalte auf externen Speichereinheiten (1) mit:
- mindestens einer externen Speichereinheit (1), die aus einem Träger (2), in dem eine zentrale Einheit vorgesehen ist, und einer Schnittstelle (3) für den Kommunikationsport eines Computers (7) besteht;
- Archiven mit verschiedenen multimedialen Inhalten, die genannten Archive sind in der genannten zentralen Einheit der genannten Speichereinheit (1) resident oder dienen dazu, in die genannte Speichereinheit (1) geladen zu werden; und
- einem integrierten Verwaltungsprogramm, das in der genannten zentralen Einheit der genannten Speichereinheit (1) resident ist, das genannte Verwaltungsprogramm dient dazu, die Archivierungs-, Verwaltungs-, Anzeigephasen auszuführen und die genannten Archive mit multimedialen Inhalten zu schützen, das genannte Verwaltungsprogramm dient dazu, die Phase zum Schutz der genannten Archive mit multimedialen Inhalten vor nicht autorisierten Zugriffen durch folgende Phasen auszuführen:
- Vorbereitung der Speichereinheiten (1) mit Seriennummern;
- Zuordnung der multimedialen Dateien mit Lizenznummern;
- Individuelle Gestaltung der multimedialen Dateien mit Seriennummern der Speichereinheiten (1), auf die sie übertragen werden; und
- Integration der multimedialen Dateien, die vorher durch einen Browser entladen wurden, durch die Verwaltungssoftware in die Speichereinheit (1);
und ist **dadurch gekennzeichnet, dass**:
- die Prüfphase durch die Verwaltungssoftware für die Verwaltung der multimedialen Inhalte folgende Schutzkontrollen einschließt:
- Der Träger der Speichereinheit (1), in dem sich die Verwaltungssoftware befindet, muss herausnehmbar sein;
- Der Name der Verwaltungssoftware im herausnehmbaren Träger muss dem Namen entsprechen, der in der Verwaltungssoftware enthalten ist;
- Der Name des herausnehmbaren Trägers der Speichereinheit (1) muss dem Namen entsprechen, der in der Verwaltungssoftware enthalten ist;
- Intern im herausnehmbaren Träger der Speichereinheit (1) muss eine kryptierte Datei vorhanden sein, die die Lizenznummer, welche den multimedialen Dateien zugeordnet wurde, enthält; und
- Die Seriennummer in der kryptierten Datei mit der Lizenznummer muss der Seriennummer des herausnehmbaren Trägers der Speichereinheit (1) entsprechen.

2. System gemäß Patentanspruch 1, das **dadurch gekennzeichnet ist, dass** die genannte Kommunikationsschnittstelle (3) der genannten externen Speichereinheiten (1) eine U.S.B.-Einheit (Universal Serial Bus) ist

3. System gemäß Patentanspruch 1, das **dadurch gekennzeichnet ist, dass** die genannte Kommunikationsschnittstelle (3) der genannten externen Speichereinheiten (1) eine U.S.B.-Einheit 2, Firewire (IEEE 1394), Smart Media oder Flash RAM ist.

4. System gemäß Patentanspruch 1, das **dadurch gekennzeichnet ist, dass** das genannte Verwaltungsprogramm die Archivierungsphase der genannten Archive mit multimedialen Inhalten durch folgende Phasen ausführt:
- Entladung des zusätzlichen multimedialen Inhalts in Form einer Datei über Internet zusammen mit einer Lizenznummer;
- Anschluss des Systems durch einen Port am Computer (7);
- Automatische Anzeige der Ikone der Speichereinheit (1) durch den Computer (7) auf dem Desktop des Bildschirms (9);
- Aktivierung des Aktualisierungsmechanismus durch Betätigung der Ikone der Dateien mit den multimedialen Inhalten;
- Automatische Ausführung der genannten Schutzprüfungen, einer Anfrage der Lizenznummer und einer Kopie der multimedialen Datei in die Speichereinheit (1) des Systems durch die Verwaltungssoftware des Systems; und
- Anzeige der Hauptbildschirmanzeige mit schon aktualisiertem Dropdowninhalt, der die Titel der hinzugefügten multimedialen Dateien enthält, durch die Verwaltungssoftware.

5. System gemäß Patentanspruch 1, das **dadurch gekennzeichnet ist, dass** das genannte Verwaltungsprogramm die Verwaltungsphase der genannten Archive mit multimedialen Inhalten durch folgende Phasen ausführt:
- Entladung des zusätzlichen multimedialen Inhalts in Form einer Datei über Internet zusammen mit einer Lizenznummer;
- Anschluss des Systems durch einen Port am Computer (7);
- Automatische Anzeige der Ikone der Speichereinheit (1) durch den Computer (7) auf dem Desktop des Bildschirms (9);
- Aktivierung des Aktualisierungsmechanismus durch Betätigung der Ikone der Dateien mit den multimedialen Inhalten;
- Automatische Ausführung der notwendigen Schutzprüfungen, einer Anfrage der Lizenznummer und einer Kopie der multimedialen Datei in die Speichereinheit (1) des Systems durch die Verwaltungssoftware des Systems; und
- Aktualisierung der kopierten multimedialen Datei, der Titel und die Inhalte der genannten aktualisierten Datei werden wie vom Aktualisierungsmechanismus vorgesehen geändert.

6. System gemäß Patentanspruch 1, das **dadurch gekennzeichnet ist, dass** das genannte Verwaltungsprogramm die Anzeigephase der genannten Archive mit multimedialen Inhalten durch folgende Phasen ausführt:
- Anschluss des Systems durch einen Port am Computer (7);
- Automatische Anzeige der Ikone des Systems durch den Computer (7) auf dem Desktop des Bildschirms (9);
- Manuelle Öffnung des Ordners der Speichereinheit (1) durch Betätigung der entsprechenden Ikone;
- Ausführung der Verwaltungssoftware durch Betätigung der entsprechenden Ikone innerhalb des Ordners; und
- Anzeige eines Dropdowninhalts für die Auswahl des multimedialen Materials, das im Speicher (1) des Systems resident ist, durch die Verwaltungssoftware.

7. System gemäß Patentanspruch 1, das **dadurch gekennzeichnet ist, dass** die Prüfphase durch die Verwaltungssoftware für die Anzeige der multimedialen Inhalte folgende Kontrollen einschließt:
- Die multimediale Datei muss sich innerhalb des entsprechenden Ordners auf dem herausnehmbaren Träger des Systems befinden, in dem sich auch die Verwaltungssoftware befindet;
- Innerhalb der kryptierten Datei mit der Lizenznummer müssen auch der Name und die Lizenznummer zur Nutznießung der multimedialen Datei enthalten sein: Anderenfalls aktiviert die Verwaltungssoftware eine Anzeigemodalität, die sich nach einer vorbestimmten Zeitdauer schließt;
- Die multimediale Datei muss dieselbe Lizenznummer zur Nutznießung enthalten, die in der kryptierten Datei mit der Lizenznummer enthalten ist;
- Die multimediale Datei muss dieselbe Seriennummer des herausnehmbaren Trägers des Systems enthalten, in dem sie enthalten ist; und
- Der Name der multimedialen Datei muss dem Namen entsprechen, der in der Verwaltungssoftware enthalten ist.

8. System gemäß Patentanspruch 1, das **dadurch gekennzeichnet ist, dass** die Prüfphase durch die Verwaltungssoftware für die Hinzufügung der multimedialen Inhalte folgende Kontrollen einschließt:
- Die multimediale Datei darf nie vorher entladen worden sein; die multimediale Datei darf daher keine Lizenznummern enthalten;
- Die für die Anzeige verwendete Lizenznummer darf vorher nie verwendet worden sein, daher darf sie nicht in der kryptierten Datei mit der Lizenznummer enthalten sein; und
- Die für die Anzeige verwendete Lizenznummer muss aufgrund des Benutzerpasswortes und der Seriennummer des herausnehmbaren Trägers des Systems durch einen spezifischen Algorithmus erzeugt worden sein.

9. Verfahren für die Archivierung von Archiven mit multimedialen Inhalten, die mit Verwendung eines Systems gemäß Patentanspruch 1 in externen Speichereinheiten (1) gespeichert wurden, das genannte Verfahren schließt folgende Phasen ein:
- Entladung des zusätzlichen multimedialen Inhalts in Form einer Datei über Internet zusammen mit einer Lizenznummer;
- Anschluss des Systems durch einen Port am Computer (7);
- Automatische Anzeige der Ikone der Speichereinheit (1) durch den Computer (7) auf dem Desktop des Bildschirms (9);
- Aktivierung eines Aktualisierungsmechanismus durch Betätigung der Ikone der Dateien mit den multimedialen Inhalten;
- Automatische Ausführung der genannten Schutzprüfungen, einer Anfrage der Lizenznummer und einer Kopie der multimedialen Datei in die Speichereinheit (1) des Systems durch die Verwaltungssoftware des Systems; und
- Anzeige der Hauptbildschirmanzeige mit schon aktualisiertem Dropdowninhalt, der die Titel der hinzugefügten multimedialen Dateien enthält, durch die Verwaltungssoftware.

10. Verfahren für die Verwaltung von Archiven mit multimedialen Inhalten, die mit Verwendung eines Systems gemäß Patentanspruch 1 in externen Speichereinheiten (1) gespeichert wurden, das genannte Verfahren schließt folgende Phasen ein:
- Entladung des zusätzlichen multimedialen Inhalts in Form einer Datei über Internet zusammen mit einer Lizenznummer;
- Anschluss des Systems durch einen Port am Computer (7);
- Automatische Anzeige der Ikone der Speichereinheit durch den Computer (7) auf dem Desktop des Bildschirms (9);
- Aktivierung eines Aktualisierungsmechanismus durch Betätigung der Ikone der Dateien mit den multimedialen Inhalten;
- Automatische Ausführung der genannten Schutzprüfungen, einer Anfrage der Lizenznummer und einer Kopie der multimedialen Datei in die Speichereinheit (1) des Systems durch die Verwaltungssoftware des Systems; und
- Aktualisierung der kopierten multimedialen Datei, der Titel und die Inhalte der genannten aktualisierten Datei werden wie vom Aktualisierungsmechanismus vorgesehen geändert.

11. Verfahren für die Anzeige von Archiven mit multimedialen Inhalten, die mit Verwendung eines Systems gemäß Patentanspruch 1 in externen Speichereinheiten (1) gespeichert wurden, das genannte Verfahren schließt folgende Phasen ein:
- Anschluss des Systems durch einen Port am Computer (7);
- Automatische Anzeige der Ikone des Systems durch den Computer (7) auf dem Desktop des Bildschirms (9);
- Manuelle Öffnung eines Ordners der Speichereinheit (1) durch Betätigung der entsprechenden Ikone;
- Ausführung der Verwaltungssoftware durch Betätigung der entsprechenden Ikone innerhalb des Ordners; und
- Anzeige eines Dropdowninhalts für die Auswahl des multimedialen Materials, das im Speicher (1) des Systems resident ist, durch die Verwaltungssoftware.

12. Verfahren für den Schutz von Archiven mit multimedialen Inhalten, die mit Verwendung eines Systems gemäß Patentanspruch 1 in externen Speichereinheiten (1) gespeichert wurden, das genannte Verfahren schließt folgende Phasen ein:
- Vorbereitung der Speichereinheiten (1) mit Seriennummern;
- Zuordnung der multimedialen Dateien mit Lizenznummern;
- Individuelle Gestaltung der multimedialen Dateien mit Seriennummern der Speichereinheiten (1), auf die sie übertragen werden; und
- Integration der multimedialen Dateien, die vorher durch einen Browser entladen wurden, durch die Verwaltungssoftware in die Speichereinheit (1);

13. System gemäß Patentanspruch 12, das **dadurch gekennzeichnet ist, dass** die Prüfphase durch die Verwaltungssoftware für die Verwaltung der multimedialen Inhalte folgende Kontrollen einschließt:
- Der Träger der Speichereinheit (1), in dem sich die Verwaltungssoftware befindet, muss herausnehmbar sein;
- Der Name der Verwaltungssoftware im herausnehmbaren Träger muss dem Namen entsprechen, der in der Verwaltungssoftware enthalten ist;
- Der Name des herausnehmbaren Trägers der Speichereinheit (1) muss dem Namen entsprechen, der in der Verwaltungssoftware enthalten ist;
- Intern im herausnehmbaren Träger der Speichereinheit (1) muss eine kryptierte Datei vorhanden sein, die die Lizenznummer, welche den multimedialen Dateien zugeordnet wurde, enthält; und
- Die Seriennummer in der kryptierten Datei mit der Lizenznummer muss der Seriennummer des herausnehmbaren Trägers der Speichereinheit (1) entsprechen.

14. System gemäß Patentanspruch 12, das **dadurch gekennzeichnet ist, dass** die Prüfphase durch die Verwaltungssoftware für die Anzeige der multimedialen Inhalte folgende Kontrollen einschließt:
- Die multimediale Datei muss sich innerhalb des entsprechenden Ordners auf dem herausnehmbaren Träger des Systems befinden, in dem sich auch die Verwaltungssoftware befindet;
- Innerhalb der kryptierten Datei mit der Lizenznummer müssen auch der Name und die Lizenznummer zur Nutznießung der multimedialen Datei enthalten sein: Anderenfalls aktiviert die Verwaltungssoftware eine Anzeigemodalität, die sich nach einer vorbestimmten Zeitdauer schließt;
- Die multimediale Datei muss dieselbe Lizenznummer zur Nutznießung enthalten, die in der kryptierten Datei mit der Lizenznummer enthalten ist;
- Die multimediale Datei muss dieselbe Seriennummer des herausnehmbaren Trägers des Systems enthalten, in dem sie enthalten ist; und
- Der Name der multimedialen Datei muss dem Namen entsprechen, der in der Verwaltungssoftware enthalten ist.

15. System gemäß Patentanspruch 12, das **dadurch gekennzeichnet ist, dass** die Prüfphase durch die Verwaltungssoftware für die Hinzufügung der multimedialen Inhalte folgende Kontrollen einschließt:
- Die multimediale Datei darf nie vorher entladen worden sein; die multimediale Datei darf daher keine Lizenznummern enthalten;
- Die für die Anzeige verwendete Lizenznummer darf vorher nie verwendet worden sein, daher darf sie nicht in der kryptierten Datei mit der Lizenznummer enthalten sein; und
- Die für die Anzeige verwendete Lizenznummer muss aufgrund des Benutzerpasswortes und der Seriennummer des herausnehmbaren Trägers des Systems der Erfindung durch einen spezifischen Algorithmus erzeugt worden sein.

## Revendications

1. Système pour l'archivage, la gestion, l'affichage et la protection des contenus multimédia sur des unités de mémoire extérieures (1), comprenant:
- au moins une unité de mémoire extérieure (1) constituée d'un corps de support (2) au sein duquel se trouve l'unité centrale, et d'une interface (3) pour une porte de communication d'un ordinateur (7);
- des archives avec divers contenus multimédia, ces archives résidant dans l'unité centrale de ladite unité de mémoire (1) ou pouvant être téléchargées dans ladite unité de mémoire (1); et
- un programme de gestion intégré, résidant dans l'unité centrale de ladite unité de mémoire (1), ledit programme de gestion étant capable d'effectuer les opérations suivantes: archivage, gestion, affichage et protection desdites archives à contenus multimédia, ledit programme de gestion pouvant effectuer la protection desdites archives à contenus multimédia contre tout accès non autorisé, tout au long des phases suivantes:
- préparation des unités de mémoire (1) avec numéros de série;
- association des fichiers multimédia à des numéros de licence;
- personnalisation des fichiers multimédia avec les numéros de série des unités de mémoire (1) sur lesquelles ces fichiers seront transférés; et
- intégration au sein de l'unité de mémoire (1), de la part du logiciel de gestion, de fichiers multimédia qui auront été préalablement télédéchargés à travers un browser;
**caractérisé en ce que**:
- la phase de vérification pour la gestion des contenus multimédia de la part du logiciel de gestion, comprend les contrôles de protection suivants:
- le support de l'unité de mémoire (1), dans lequel se trouve le logiciel de gestion, doit être du type amovible;
- le nom du logiciel de gestion installé dans le support amovible doit correspondre au nom contenu à l'intérieur du logiciel de gestion;
- le nom du support amovible de l'unité de mémoire (1) doit correspondre au nom contenu à l'intérieur du logiciel de gestion;
- il doit y avoir, à l'intérieur du support amovible de l'unité de mémoire (1), un fichier crypté contenant le numéro de licence associé aux fichiers multimédia; et
- le numéro de série à l'intérieur du fichier crypté avec le numéro de licence doit correspondre au numéro de série du support amovible de l'unité de mémoire (1).

2. Système selon la revendication 1, **caractérisé en ce que** ladite interface di communication (3) desdites unités de mémoire extérieures (1) est du type U.S.B. (Universal Serial Bus)

3. Système selon la revendication 1, **caractérisé en ce que** ladite interface di communication (3) desdites unités de mémoire extérieures (1) est du type U.S.B.2, Firewire (IEEE 1394), Smart Media ou Flash RAM.

4. Système selon la revendication 1, **caractérisé en ce que** ledit programme de gestion effectue l'opération d'archivage desdites archives à contenus multimédia à travers les opérations suivantes:
- télédéchargement du contenu multimédia additionnel sous forme de fichiers via Internet accompagné d'un numéro de licence;
- connexion du système à l'ordinateur (7) à travers une porte;
- affichage automatique, de la part de l'ordinateur (7), de l'icône de l'unité de mémoire (1) sur le desktop de son afficheur (9);
- activation du mécanisme de mise à jour en cliquant sur l'icône du fichier des contenus multimédia;
- exécution automatique, de la part du logiciel de gestion du système, desdites vérifications de protection, d'une demande du numéro de licence et d'une copie du fichier multimédia dans l'unité de mémoire (1) du système; et
- affichage, de la part du logiciel de gestion, de la page-écran principale, avec l'index déroulant mis à jour, contenant les titres des fichiers multimédia additionnels.

5. Système selon la revendication 1, **caractérisé en ce que** ledit programme de gestion effectue l'opération de gestion desdites archives à contenus multimédia en passant par les phases ci-dessous:
- télédéchargement du contenu multimédia additionnel sous forme de fichiers via Internet accompagné d'un numéro de licence;
- connexion du système à l'ordinateur (7) à travers une porte;
- affichage automatique, de la part de l'ordinateur (7), de l'icône de l'unité de mémoire (1) sur le desktop de son afficheur (9);
- activation du mécanisme de mise à jour en cliquant sur l'icône du fichier des contenus multimédia;
- exécution automatique, de la part du logiciel de gestion du système, desdites vérifications de protection nécessaires, d'une demande du numéro de licence et d'une copie du fichier multimédia dans la mémoire (1) du système; et
- mise à jour du fichier multimédia copié, ledit fichier mis à jour étant modifié dans le titre et dans les contenus selon ce qui est prévu par le mécanisme de mise à jour.

6. Système selon la revendication 1, **caractérisé en ce que** ledit programme de gestion effectue l'opération d'affichage desdites archives à contenus multimédia à travers les phases suivantes:
- connexion du système à l'ordinateur (7) à travers une porte;
- affichage automatique, de la part de l'ordinateur (7), de l'icône de l'unité de mémoire (1) sur le desktop de son afficheur (9);
- ouverture manuelle du dossier de l'unité de mémoire (1) en cliquant sur l'icône correspondante;
- exécution du logiciel de gestion en cliquant sur l'icône correspondante à l'intérieur du dossier; et
- affichage, de la part du logiciel de gestion, d'un index déroulant pour la sélection du matériel multimédia résidant dans la mémoire (1) du système.

7. Système selon la revendication 1, **caractérisé en ce que** l'opération de vérification de la part du logiciel de gestion pour l'affichage des contenus multimédia, comporte les contrôles suivants:
- le fichier multimédia doit être présent à l'intérieur du dossier correspondant sur le support amovible du système au sein duquel se trouve le logiciel de gestion;
- à l'intérieur du fichier crypté avec le numéro de licence, doivent se trouver le nom et le numéro de licence d'usufruit du fichier multimédia: dans le cas contraire, le logiciel de gestion active un mode d'affichage qui se désactive après une période de temps déterminée;
- le fichier multimédia doit contenir le même numéro de licence d'usufruit présent à l'intérieur du fichier crypté avec le numéro de licence;
- le fichier multimédia doit contenir le même numéro de série du support amovible du système dans lequel il se trouve; et
- le nom du fichier multimédia doit correspondre au nom contenu à l'intérieur du logiciel de gestion.

8. Système selon la revendication 1, **caractérisé en ce que** la phase de vérification de la part du logiciel de gestion, pour l'ajout des contenus multimédia, comporte les contrôles suivants:
- le fichier multimédia ne doit jamais être préalablement télédéchargé; le fichier multimédia ne doit donc pas contenir les numéros de licence;
- le numéro de licence utilisé pour l'affichage ne doit jamais avoir été utilisé auparavant, il ne doit donc pas se trouver à l'intérieur du fichier crypté avec le numéro de licence; et
- le numéro de licence utilisé pour l'affichage doit avoir été créé sur la base du mot de passe de l'utilisateur et du numéro de série du support amovible du système, à travers un algorithme spécifique.

9. Méthode pour l'archivage d'archives à contenus multimédia mémorisées dans des unités de mémoire extérieures (1) avec l'utilisation d'un système selon la revendication 1, ladite méthode comprenant les opérations suivantes:
- télédéchargement du contenu multimédia additionnel sous forme de fichier via Internet accompagné d'un numéro de licence;
- connexion du système à l'ordinateur (7) à travers une porte;
- affichage automatique, de la part de l'ordinateur (7), de l'icône de l'unité de mémoire (1) sur le desktop de son afficheur (9);
- activation d'un mécanisme de mise à jour en cliquant sur l'icône du fichier des contenus multimédia;
- exécution automatique, de la part du logiciel de gestion du système, desdites vérifications de protection, d'une demande du numéro de licence et d'une copie du fichier multimédia dans la mémoire (1) du système; et
- affichage, de la part du logiciel de gestion, de la page-écran principale, avec l'index déroulant mis à jour, contenant les titres des fichiers multimédia additionnels.

10. Méthode pour l'archivage d'archives à contenus multimédia mémorisées dans des unités de mémoire extérieures (1) avec l'utilisation d'un système selon la revendication 1, ladite méthode comprenant les opérations suivantes:
- télédéchargement du contenu multimédia additionnel sous forme de fichier via Internet accompagné d'un numéro de licence;
- connexion du système à l'ordinateur (7) à travers une porte;
- affichage automatique, de la part de l'ordinateur (7), de l'icône de l'unité de mémoire (1) sur le desktop de son afficheur (9);
- activation d'un mécanisme de mise à jour en cliquant sur l'icône du fichier des contenus multimédia;
- exécution automatique, de la part du logiciel de gestion du système, desdites vérifications de protection, d'une demande du numéro de licence et d'une copie du fichier multimédia dans la mémoire (1) du système; et
- mise à jour du fichier multimédia copié, ledit fichier mis à jour étant modifié dans le titre et dans les contenus d'après ce qui est prévu par le mécanisme de mise à jour.

11. Méthode pour l'archivage d'archives à contenus multimédia mémorisées dans des unités de mémoire extérieures (1) avec l'utilisation d'un système selon la revendication 1, ladite méthode comprenant les opérations suivantes:
- connexion du système à l'ordinateur (7) à travers une porte;
- affichage automatique, de la part de l'ordinateur (7), de l'icône de l'unité de mémoire (1) sur le desktop de son afficheur (9);
- ouverture manuelle du dossier de l'unité de mémoire (1) en cliquant sur l'icône correspondante;
- exécution du logiciel de gestion en cliquant sur l'icône correspondante à l'intérieur du dossier; et
- affichage, de la part du logiciel de gestion, d'un index déroulant pour la sélection du matériel multimédia résidant dans la mémoire (1) du système.

12. Méthode pour l'archivage d'archives à contenus multimédia mémorisées dans des unités de mémoire extérieures (1) avec l'utilisation d'un système selon la revendication 1, ladite méthode comprenant les opérations suivantes:
- préparation des unités de mémoire (1) avec numéros de série;
- association des fichiers multimédia à des numéros de licence;
- personnalisation des fichiers multimédia avec les numéros de série des unités de mémoire (1) sur lesquelles ils seront transférés; et
- intégration à l'intérieur de l'unité de mémoire (1), de la part du logiciel de gestion, de fichiers multimédia qui auront été préalablement télédéchargés à travers un browser.

13. Méthode selon la revendication 12, **caractérisée en ce que** l'opération de vérification, de la part du logiciel de gestion, pour la gestion des contenus multimédia, comprend les contrôles suivants:
- le support de l'unité de mémoire (1), dans lequel se trouve le logiciel de gestion, doit être du type amovible;
- le nom du logiciel de gestion installé dans le support amovible doit correspondre au nom contenu à l'intérieur du logiciel de gestion;
- le nom du support amovible de l'unité de mémoire (1) doit correspondre au nom contenu à l'intérieur du logiciel de gestion;
- il doit y avoir, à l'intérieur du support amovible de l'unité de mémoire (1), un fichier crypté contenant le numéro de licence associé aux fichiers multimédia; et
- le numéro de série à l'intérieur du fichier crypté avec le numéro de licence doit correspondre au numéro de série du support amovible de l'unité de mémoire (1).

14. Méthode selon la revendication 12, **caractérisée en ce que** l'opération de vérification, de la part du logiciel de gestion, pour l'affichage des contenus multimédia, comprend les contrôles suivants:
- le fichier multimédia doit se trouver à l'intérieur du dossier correspondant sur le support amovible du système, dans lequel se trouve aussi le logiciel de gestion;
- à l'intérieur du fichier crypté avec le numéro de licence doivent se trouver le nom et le numéro de licence d'usufruit du fichier multimédia: dans le cas contraire, le logiciel de gestion active un mode d'affichage qui se désactive après une période de temps déterminée;
- le fichier multimédia doit contenir le même numéro de licence d'usufruit présent à l'intérieur du fichier crypté avec le numéro de licence;
- le fichier multimédia doit contenir le même numéro de série du support amovible du système dans lequel il se trouve; et
- le nom du fichier multimédia doit correspondre au nom contenu à l'intérieur du logiciel de gestion.

15. Méthode selon la revendication 12, **caractérisée en ce que** l'opération de vérification, de la part du logiciel de gestion, pour l'ajout des contenus multimédia, comprend les contrôles suivants:
- le fichier multimédia ne doit jamais être préalablement télédéchargé; le fichier multimédia ne doit donc pas contenir les numéros de licence;
- le numéro de licence utilisé pour la visualisation ne doit jamais avoir été utilisé auparavant, il ne doit donc pas être présent à l'intérieur du fichier crypté avec le numéro de licence; et
- le numéro de licence utilisé pour la visualisation doit avoir été créé sur la base du mot de passe de l'utilisateur et du numéro de série du support amovible du système de l'invention, à travers un algorithme.
